# EUROPÄISCHE PATENTSCHRIFT

(11) **EP 1 663 743 B1**
(45) Veröffentlichungstag und Bekanntmachung des Hinweises auf die Patenterteilung: **17.10.2012**
(21) Anmeldenummer: 04735730.6
(22) Anmeldetag: 02.06.2004
(51) Int. Cl.: B60S 1/34

(54) **WISCHVORRICHTUNG**
WIPER DEVICE
DISPOSITIF D'ESSUIE-GLACE

(30) Priorität: 08.09.2003 DE 10341280
(43) Veröffentlichungstag der Anmeldung: 07.06.2006
(73) Patentinhaber: ROBERT BOSCH GMBH, 70442 Stuttgart (DE)
(72) Erfinder: EWALD, Arnold, 76530 Baden-Baden (DE); WEILER, Michael, 363-9 Chungchongbuk-Do (KR)
(86) Internationale Anmeldenummer: PCT/DE2004/001120
(87) Internationale Veröffentlichungsnummer: WO 2005/025954

(56) Entgegenhaltungen:
- EP-A- 0 525 850
- DE-A- 10 052 616
- US-A- 1 571 516
- US-A- 2 286 449
- US-A- 4 697 297

## Beschreibung

### Stand der Technik

Die Erfindung geht aus von einer Wischvorrichtung nach dem Oberbegriff des Anspruchs 1.

Aus der DE 100 10 393 A1 ist eine Wischvorrichtung mit einer Steuereinheit bekannt, die einen Wischarm und ein an der Steuereinheit befestigtes Wischblatt aufweist. Es wird vorgeschlagen, den Wischarm als eine Parallelschwinge auszuführen, die mit zusätzlichen, die Steuereinheit bildenden Getriebegliedern verbunden ist. Mittels der Steuereinheit soll eine Lage des Wischblatts relativ zum Wischarm abhängig von einer Betriebsstellung des Wischarms gesteuert werden, und zwar in der Weise, dass die vom Wischblatt während einer Wischbewegung überstrichene Fläche möglichst weitgehend einer Rechteckform angenähert ist.

Eine gattungsgemäße Wischvorrichtung ist im Dokument US-A-2286449 offenbart.

### Vorteile der Erfindung

Die Erfindung geht aus von einer Wischvorrichtung, insbesondere eines Kraftfahrzeugs, die einen Wischarm und eine Steuereinheit zur Steuerung einer Lage eines Wischblatts relativ zum Wischarm abhängig von zumindest einer Betriebsgröße, insbesondere einer Betriebsstellung des Wischarms, aufweist. Unter Betriebsstellung sollen in diesem Zusammenhang sämtliche Stellungen verstanden werden, die in einem montierten Zustand der Wischvorrichtung auftreten können.

Es wird vorgeschlagen, dass der Wischarm einen gelenkfrei realisierten Freiheitsgrad zur Erzeugung einer Auflagekraft aufweist. Dadurch kann eine flach und schmal bauende Wischvorrichtung mit Steuereinheit und gelenkfrei realisiertem Freiheitsgrad zur Erzeugung einer Auflagekraft erreicht werden, die vorteilhafte aerodynamische Eigenschaften aufweist. Insbesondere bei einem Einsatz auf Windschutzscheiben von Kraftfahrzeugen kann eine Beeinträchtigung einer Sicht eines Kraftfahrzeugführers durch die Steuereinheit sowie ein durch die Steuereinheit gegenüber ungesteuerten Wischvorrichtungen erhöhter Windwiderstand vorteilhaft zumindest weitgehend reduziert werden.

Unter gelenkfrei realisiertem Freiheitsgrad soll in diesem Zusammenhang verstanden werden, dass ohne eine materiell ausgeführte Schwenkachse eine Bewegung ermöglicht wird. Bauteile, die infolge einer Materialverformung, insbesondere infolge einer elastischen Verformung, eine Relativbewegung zwischen einer Wischstange bzw. Teilbereichen der Wischstange und einem Befestigungsteil ermöglichen, sollen in diesem Zusammenhang nicht als Gelenk angesehen werden und sollen insbesondere vom Schutzbereich mit umfasst sein, wie beispielsweise Filmscharniere, federelastische Teilstücke, Blattfedern, federelastische Wischstangen usw.

Weiterhin wird erfindungsgemäß vorgeschlagen, dass die Steuereinheit ein vom Wischarm verschiedenes mechanisches Verbindungsteil zu einer Fahrzeugkarosserie aufweist. Dadurch kann vorteilhaft eine Betriebsstellung des Wischarms relativ zu einem starr mit der Fahrzeugkarosserie verbundenen Bauteil, insbesondere einer Windschutzscheibe eines Kraftfahrzeugs, mechanisch sensiert und als Kenngröße zur Steuerung der Lage des Wischblatts genutzt werden. Es ist jedoch auch eine andere, zum Beispiel elektromagnetische Sensor- und/oder Steuereinheit und eine indirekte Sensierung der Betriebsstellung des Wischarms, zum Beispiel über ein Bauteil einer Antriebsvorrichtung desselben, denkbar.

In einer Ausgestaltung der Erfindung wird vorgeschlagen, dass das Verbindungsteil durch einen zweiten Wischarm gegeben ist bzw. dass das Verbindungsteil zumindest die wesentlichen Funktionen eines Wischarms, insbesondere die Erzeugung einer Auflagekraft, übernehmen kann. Die Funktionen des Antriebs und der Erzeugung von Auflagekräften können auf die beiden Wischarme verteilt werden. Zudem können vorteilhaft sowohl Zug- als auch Druckkräfte über das Verbindungsteil übertragen werden. Ist der zweite Wischarm insbesondere baugleich zu dem ersten Wischarm, kann eine kostengünstige Produktion und komfortable Montage erreicht werden.

Steuert die Steuereinheit die Lage des Wischblatts relativ zum Wischarm in Abhängigkeit von einer Lage des Verbindungsteils relativ zum Wischarm, kann konstruktiv einfach und robust eine direkte Übersetzung dieser relativen Lage in die Lage des Wischblatts erreicht werden. Das Verbindungsteil kann vorteilhaft gleichzeitig eine Sensor- und Steuerfunktion übernehmen.

Erfindungsgemäß sind der Wischarm und das Verbindungsteil in zumindest einer Betriebsstellung und in zumindest einem Teilabschnitt des Wischarms in einer Aufsicht übereinander angeordnet, so kann eine besonders schlanke und durch eine flache Bauweise des Wischarms und des Verbindungsteils eine insgesamt flache Wischvorrichtung erreicht werden, die insbesondere in Kraftfahrzeugen das Sichtfeld des Kraftfahrzeugführers nur unwesentlich einschränkt.

Zudem kann vorteilhaft eine robuste und unmittelbar wirksame Steuereinheit erreicht werden, wenn der Wischarm und das Verbindungsteil an einem freien Ende des Wischarms durch eine Koppel verbunden sind, mit der das Wischblatt in einem montierten Zustand im Wesentlichen starr verbunden ist.

In einer weiteren Ausgestaltung der Erfindung wird vorgeschlagen, dass das Verbindungsteil zumindest einen biegeweichen Teilbereich aufweist. Dabei soll unter einem biegeweichen Bauteil ein solches Bauteil verstanden werden, über das sich im Wesentlichen nur Zugkräfte übertragen lassen. Insbesondere sollen in diesem Zusammenhang Seile, Ketten, Bänder und Drähte, wie sie insbesondere in Bowdenzügen verwendet werden, als biegeweiche Bauteile angesehen werden. Biegeweiche Bauteile können mit besonders kleinen Abmessungen in Richtungen senkrecht zu einer Richtung einer übertragenen Zugkraft ausgelegt werden. Dadurch kann vorteilhaft eine schmale Bauweise der Wischvorrichtung erreicht, die Steuereinheit zumindest teilweise in den Wischarm platzsparend integriert und insbesondere bei einem Einsatz in Kraftfahrzeugen eine durch die Steuereinheit bedingte, zusätzliche Sichtbehinderung eines Kraftfahrzeugführers vermieden werden.

In einer weiteren Ausgestaltung der Erfindung wird vorgeschlagen, dass der Wischarm zumindest einen durch wenigstens ein Profil versteiften Bereich aufweist. Dadurch kann vorteilhaft eine Biegesteifigkeit der Wischstange entlang ihrer Längserstreckung variiert und/oder eine gewünschte Biegesteifigkeit bei kostengünstiger Produktion erreicht werden. Durch eine geeignete Wahl einer Form der Profile kann erreicht werden, dass der versteifte Bereich als Spoiler ausgebildet ist, der eine von der Geschwindigkeit des Fahrtwinds abhängige Auflagekraft erzeugt und dem Wischarm vorteilhafte aerodynamische Eigenschaften verleiht.

Kann der Wischarm im Wesentlichen federelastisch von einer Arbeitskonfiguration in eine erste stabile Konfiguration überführt werden, in der das Wischblatt montierbar und demontierbar ist, kann vorteilhaft ein komfortables Auswechseln des Wischblatts und ein Reinigen der Windschutzscheibe in einer stabilen Abklappstellung des Wischarms ermöglicht werden. Eine solche erste stabile Konfiguration kann konstruktiv einfach durch Integration eines bistabilen Teilbereichs in den Wischarm erreicht werden.

Zudem können Fertigungstoleranzen vorteilhaft ausgeglichen werden, wenn der Wischarm eine Vorrichtung zu einer Einstellung der Auflagekraft aufweist.

In einer weiteren Ausgestaltung der Erfindung wird eine Wischvorrichtung gemäß Anspruch 8 vorgeschlagen.

Die erfindungsgemäße Wischvorrichtung ist grundsätzlich für sämtliche, dem Fachmann als sinnvoll erscheinende Wischanlagen geeignet, jedoch besonders vorteilhaft für Einarm-Wischanlagen.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung der Funktionsweise einer Wischvorrichtung mit einer Steuereinheit zur Steuerung einer Lage eines Wischblatts relativ zu einem Wischarm,
- Fig. 2 u. 3: die Wischvorrichtung aus Fig. 1 in Aufsicht und in Seitenansicht,
- Fig. 4 u. 5: eine Koppel der Wischvorrichtung aus Fig. 1 - 3 mit Abschnitten des Wischarms und eines Verbindungsteils in einer Schrägansicht und in einer Schnittdarstellung,
- Fig. 6: einen Ausschnitt der Wischvorrichtung aus Fig. 1 - 5 mit zwei Befestigungsteilen,
- Fig. 7 u. 8: eine alternative Wischvorrichtung mit einem biegeweichen Teilbereich und
- Fig. 9 - 11: einen Ausschnitt eines Wischarms für eine weitere alternative Wischvorrichtung mit einem über ein Gelenk und eine Blattfeder realisierten Freiheitsgrad.

### Beschreibung der Ausführungsbeispiele

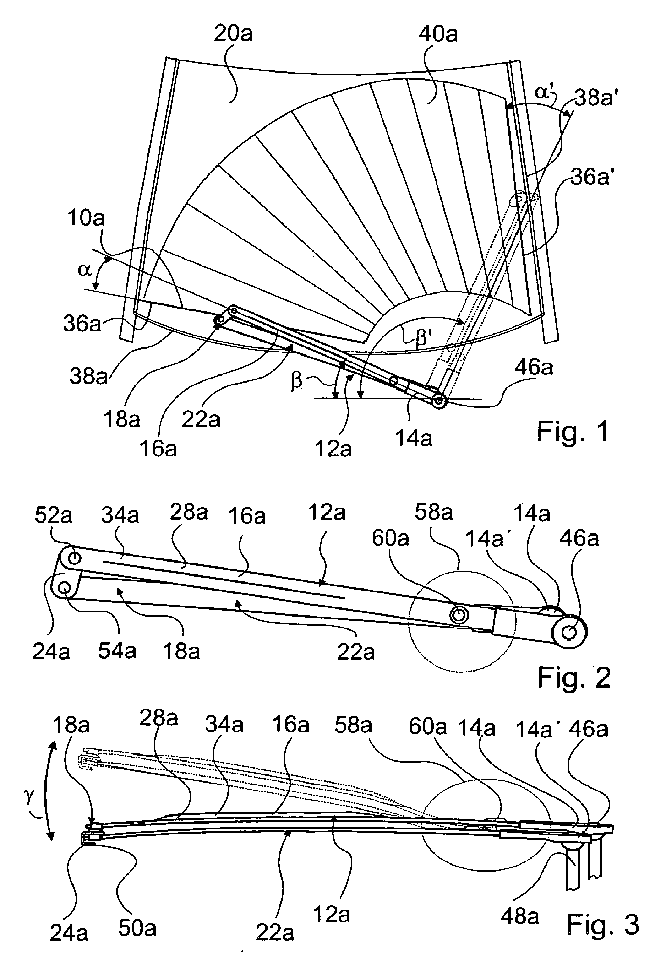

Fig. 1 zeigt eine schematische Darstellung der Funktionsweise einer Einarm-Wischvorrichtung für eine Windschutzscheibe 20a eines Kraftfahrzeugs mit einer Steuereinheit 18a zur Steuerung einer durch einen Winkel eines Wischblatts 10a relativ zu einem Wischarm 12a bestimmten Lage α abhängig von einer durch eine Betriebsstellung des Wischarms 12a gegebenen Betriebsgröße β. Der Wischarm 12a weist ein Befestigungsteil 14a und eine gelenkfrei mit diesem verbundene Wischstange 16a auf. Die Wischstange 16a ist von einer Blattfeder gebildet, wodurch der Wischarm 12a einen gelenkfrei realisierten Freiheitsgrad γ zur Erzeugung einer Auflagekraft aufweist. Durch eine Änderung der Lage α des Wischblatts 10a relativ zum Wischarm 12a abhängig von der Betriebsgröße β des Wischarms 12a verläuft das Wischblatt 10a in einer oberen Umkehrlage 36a' und einer unteren Umkehrlage 36a jeweils im Wesentlichen parallel zu einer Kante 38a, 38a' der Windschutzscheibe 20a, wobei gleichzeitig ein Anteil einer überstrichenen Fläche 40a an der Fläche der Windschutzscheibe 20a im Vergleich zu einer Wischbewegung mit konstanter Lage α vorteilhaft vergrößert ist.

Neben dem Wischarm 12a weist die Wischvorrichtung ein weiteres mechanisches, von einem zweiten Wischarm gebildetes Verbindungsteil 22a auf, das in einem montierten Zustand an einem befestigungsseitigen Ende über eine Achse 48a mit einer nicht dargestellten Karosserie schwenkbar verbunden und in wesentlichen Zügen dem Wischarm 12a baugleich ist.

Der Wischarm 12a ist an seinem befestigungsseitigen Ende an einer Antriebswelle 46a befestigt und führt an seinem freien Ende das über eine Koppel 24a mit ihm verbundene Verbindungsteil 22a bei der Wischbewegung mit.

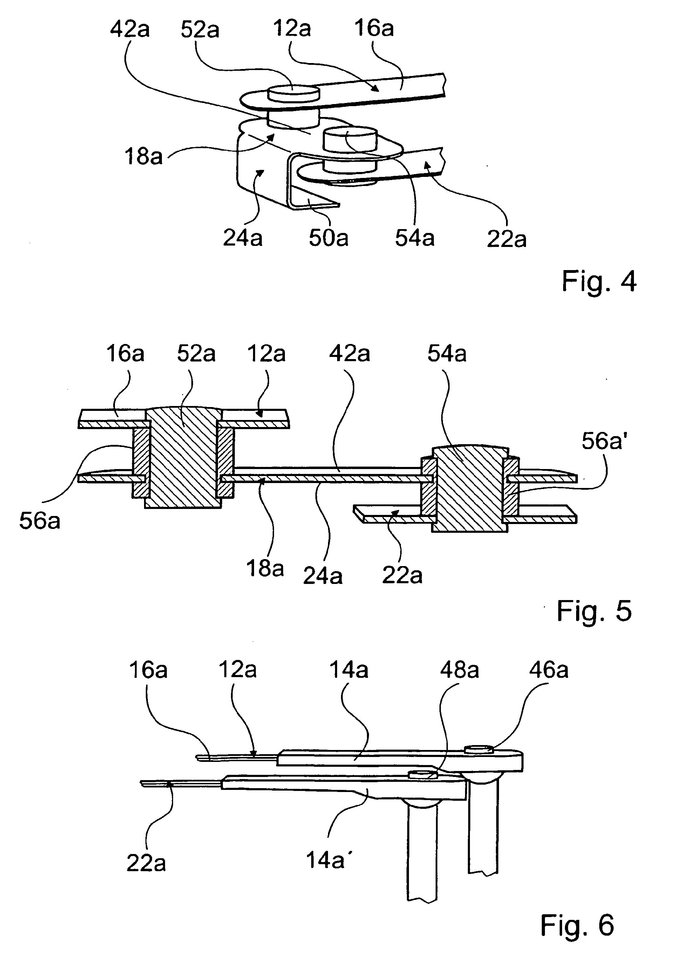

Die Koppel 24a weist einen Verbindungsbereich 42a und eine Schnittstelle 50a auf, an der das Wischblatt 10a befestigt werden kann. Der Verbindungsbereich 42a besteht aus flachem Blech mit zwei Löchern, durch die die Koppel 24a über zwei Nieten 52a, 54a mit einer Kunststoffummantelung 56a mit dem Wischarm 12a und dem Verbindungsteil 22a verbunden ist (Fig. 4 u. 5). Die Nieten 52a, 54a bilden Gelenke, so dass der Wischarm 12a und das Verbindungsteil 22a mit der Koppel 24a im Wesentlichen eine Parallelkurbel bilden, die eine Steuereinheit 18a zur Steuerung der Lage α des Wischblatts 10a relativ zum Wischarm 12a darstellt. Eine mit dem Verbindungsbereich 42a einstückig ausgeführte Lasche ist über zwei 90°-Umlenkungen zu einem Haken gebogen. An einem unteren, zum Verbindungsbereich 42a parallelen, die Schnittstelle 50a bildenden Bereich der Lasche kann das Wischblatt 10a angeklemmt oder verschraubt werden.

Die relative Lage des Wischarms 12a und des Verbindungsteils 22a ist durch die Betriebsgröße β, also die Betriebsstellung des Wischarms 12a, bestimmt und verändert sich während einer Wischbewegung. Dabei sind der Wischarm 12a und das Verbindungsteil 22a in der unteren Umkehrlage 36a übereinander angeordnet und überschneiden sich in einer Aufsicht (Fig. 2). In der oberen Umkehrlage 36a' verlaufen Wischarm 12a und Verbindungsteil 22a in ihrer Längserstreckung im Wesentlichen parallel. Dadurch wird die Änderung der relativen Lage des Wischarms 12a und des Verbindungsteils 22a unmittelbar in eine Änderung der Lage der Koppel 24a - und damit der Lage α des Wischblatts 10a relativ zum Wischarm 12a übersetzt. Eine funktionale Form dieser Übersetzung ist durch eine Wahl der Längen der Bauteile 12a, 22a und 24a und der Orte der Antriebswelle 46a und der Achse 48a bestimmt.

Zur Erhöhung einer Biegesteifigkeit weist der Wischarm 12a einen durch ein Profil versteiften Bereich 28a auf, der als Spoiler 34a ausgebildet ist. Ein Fahrtwind erzeugt an einer Oberseite des Spoilers 34a einen Überdruck und an einer Unterseite einen Unterdruck. Eine daraus resultierende Kraft wird an einer Windschutzscheibe 20a abgestützt und erzeugt eine von einer Geschwindigkeit des Fahrtwinds abhängige Auflagekraft.

Der Wischarm 12a umfasst einen bistabilen Teilbereich 58a, der eine gewölbte Ausformung 60a aufweist. Dadurch lässt sich der Wischarm 12a im Wesentlichen federelastisch über den gelenkfrei realisierten Freiheitsgrad γ von einer Arbeitskonfiguration, in der sich die Ausformung 60a in eine von der Windschutzscheibe 20a abgewandte Richtung erstreckt und sich zur Windschutzscheibe 20a hin öffnet, über einen Umschlagpunkt, in dem sich die Ausformung 60a schlagartig umstülpt, in eine gestrichelt eingezeichnete Abklappstellung (Fig. 3) überführen, in der sich die Ausformung 60a in eine der Windschutzscheibe 20a zugewandte Richtung erstreckt und sich in eine der Windschutzscheibe 20a abgewandte Richtung öffnet. Dadurch kann vorteilhaft eine komfortable Montage und Demontage des Wischblatts 10a ermöglicht werden.

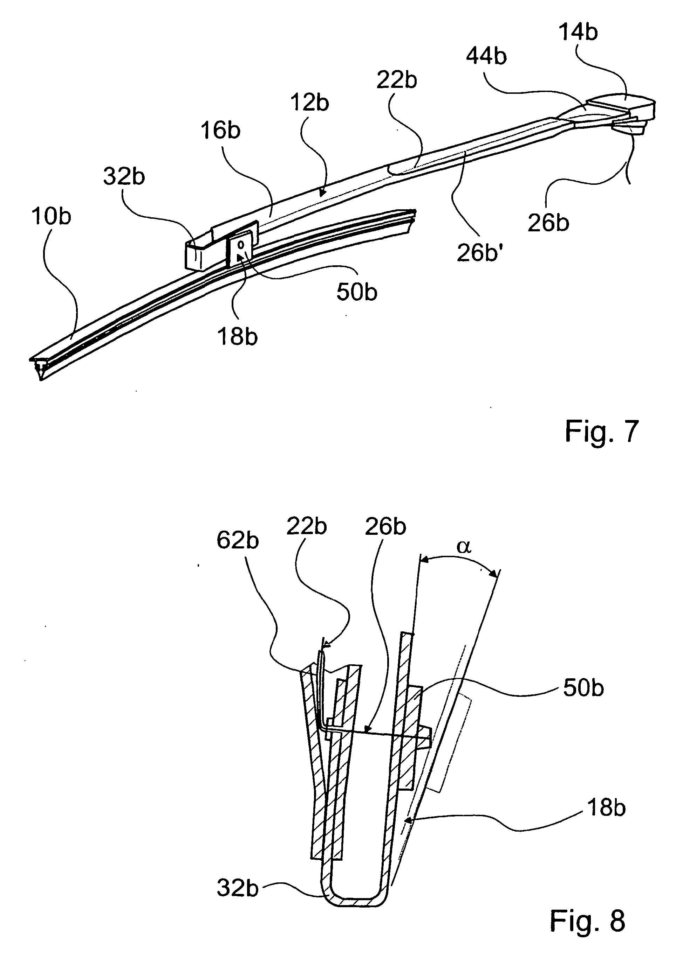

In den Fig. 7 bis 11 sind Ausschnitte oder Bauteile alternativer Wischvorrichtungen dargestellt. Bei den Ausführungsbeispielen sind in der Beschreibung im Wesentlichen gleiche Bauteile und gleiche Merkmale grundsätzlich mit den gleichen Bezugszeichen beziffert, wobei zur Unterscheidung der Ausführungsbeispiele Buchstaben hinzugefügt sind. Ferner kann bezüglich gleich bleibender Merkmale und Funktionen auf die Beschreibung zu den Ausführungsbeispielen in Fig. 1 bis 6 verwiesen werden. Die nachfolgende Beschreibung beschränkt sich im Wesentlichen auf die Unterschiede zum Ausführungsbeispiel in den Fig. 1 und 6.

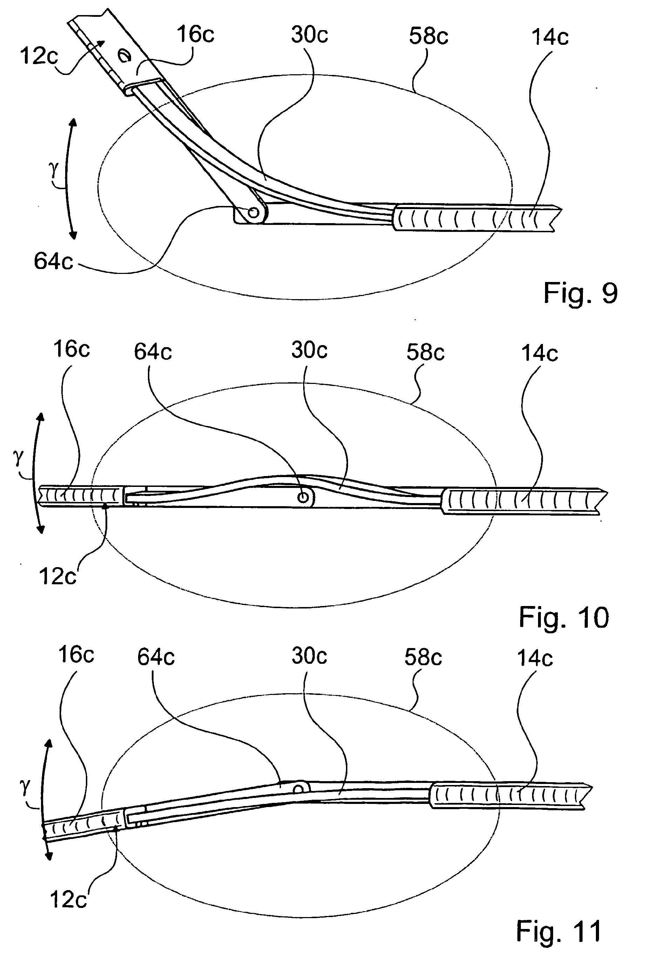

Bei einer alternativen Wischvorrichtung ist ein Verbindungsteil 22b durch einen als Drahtzug ausgebildeten, in einer Hülle 62b geführten biegeweichen Teilbereich 26b realisiert, der in einem ersten Abschnitt 26b' in einem Innenraum einer röhrenförmigen Wischstange 16b geführt ist und bei der Montage an einem freien Ende 26b (Fig. 10) unter einer Vorspannung mit einer hier nicht dargestellten Karosserie verbunden wird.

Die Wischstange 16b ist über einen federelastischen Teilbereich 44b gelenkfrei mit einem Befestigungsteil 14b verbunden und umlappt an ihrem freien Ende einen ersten Schenkel einer in einer kraftfreien Konfiguration V-förmigen Blattfeder 32b. Das Verbindungsteil 22b greift an einem zweiten, freien Schenkel der Blattfeder 32b an, an dem zudem ein Wischblatt 10b befestigt ist, und übt eine Zugkraft auf diesen aus, die über die Hülle 62b am ersten Schenkel der Blattfeder 32b abgestützt wird, so dass ein Öffnungswinkel α' der Blattfeder 32b sich bei wachsender Zugkraft verkleinert und sich damit die Lage α des Wischblatts 10b zur Wischstange 16b verändert (Fig. 8). Die Zugkraft kann prinzipiell abhängig von einer beliebigen Betriebsgröße über das Verbindungsteil 22b eingeleitet werden. Ist das Verbindungsteil 22b allerdings starr mit einer hier nicht dargestellten Karosserie verbunden, kann, insbesondere über eine Abrollfläche für das Verbindungsteil 22b, eine Kraft eingeleitet und zur Steuerung der Lage α des Wischblatts 10b genutzt werden, die direkt von einer durch eine Betriebsstellung des Wischarms 12b gegebenen Betriebsgröße β bestimmt ist.

Fig. 9 bis 11 stellen einen bistabilen Teilbereich 58c einer weiteren alternativen Wischvorrichtung mit einem Blattfederelement 30c, einem Gelenk 64c und mit einer hier nicht dargestellten Steuereinheit zur Steuerung einer Lage eines Wischblatts relativ zu einem Wischarm 12c dar. Der bistabile Teilbereich 58c dient als Abklappvorrichtung, ersetzt den bistabilen Teilbereich 58a (Fig. 1 bis 3) und kann durch ein Umstülpen einer Wölbung des Blattfederelements 30c von einer Arbeitskonfiguration (Fig. 10), in der das Blattfederelement 30c eine Auflagekraft erzeugt, in eine erste stabile Konfiguration (Fig. 9) überführt werden, in der eine komfortable Montage und Demontage eines Wischblatts möglich ist. Fig. 11 zeigt eine zweite, einer Anlieferstellung zugeordnete stabile Konfiguration.

### Bezugszeichen

- 10: Wischblatt
- 12: Wischarm
- 14: Befestigungsteil
- 16: Wischstange
- 18: Steuereinheit
- 20: Windschutzscheibe
- 22: Verbindungsteil
- 24: Koppel
- 26: Teilbereich
- 28: Bereich
- 30: Blattfederelement
- 32: Blattfeder
- 34: Spoiler
- 36: Umkehrlage
- 38: Kante
- 40: Fläche
- 42: Verbindungsbereich
- 44: Teilbereich
- 46: Antriebswelle
- 48: Achse
- 50: Schnittstelle
- 52: Niete
- 54: Niete
- 56: Kunststoffummantelung
- 58: Teilbereich
- 60: Ausformung
- 62: Hülle
- 64: Gelenk
- α: Lage
- β: Betriebsgröße
- γ: Freiheitsgrad

## Patentansprüche

1. Wischvorrichtung, insbesondere eines Kraftfahrzeugs, die einen Wischarm (12a, 12b) und eine Steuereinheit (18a, 18b) zur Steuerung einer Lage (α) eines Wischblatts (10a, 10b) relativ zum Wischarm (12a, 12b) abhängig von zumindest einer Betriebsgröße (β), insbesondere einer Betriebsstellung des Wischarms (12a, 12b), aufweist, wobei der Wischarm (12a, 12b) einen gelenkfrei realisierten Freiheitsgrad (γ) zur Erzeugung einer Auflagekraft aufweist, wobei die Steuereinheit (18a, 18b) ein vom Wischarm (12a, 12b) verschiedenes mechanisches Verbindungsteil (22a, 22b) zu einer Fahrzeugkarosserie aufweist, **dadurch gekennzeichnet, dass** der Wischarm (12a, 12b) und das Verbindungsteil (22a, 22b) in zumindest einer Betriebsstellung und in zumindest einem Teilabschnitt des Wischarms (12a, 12b) in einer Aufsicht übereinander angeordnet sind.

2. Wischvorrichtung nach Anspruch 1, **dadurch gekennzeichnet, dass** das Verbindungsteil (22a, 22b) durch einen zweiten Wischarm gegeben ist.

3. Wischvorrichtung zumindest nach Anspruch 1, **dadurch gekennzeichnet, dass** die Steuereinheit (18a, 18b) die Lage (α) des Wischblatts (10a, 10b) in Abhängigkeit von einer Lage des Verbindungsteils (22a, 22b) relativ zum Wischarm (12a, 12b) steuert.

4. Wischvorrichtung zumindest nach Anspruch 1, **dadurch gekennzeichnet, dass** der Wischarm (12a) und das Verbindungsteil (22a) an einem freien Ende des Wischarms (12a) durch eine Koppel (24a) verbunden sind, mit der das Wischblatt (10a) in einem montierten Zustand im Wesentlichen starr verbunden ist.

5. Wischvorrichtung zumindest nach Anspruch 1, **dadurch gekennzeichnet, dass** das Verbindungsteil (22b) zumindest einen biegeweichen Teilbereich (26b) aufweist.

6. Wischvorrichtung nach einem der vorhergehenden Ansprüche, **dadurch gekennzeichnet, dass** der Wischarm (12a) zumindest einen durch wenigstens ein Profil versteiften Bereich (28a) aufweist.

7. Wischvorrichtung nach Anspruch 6, **dadurch gekennzeichnet, dass** der versteifte Bereich (28a) als Spoiler (34a) ausgebildet ist.

8. Wischvorrichtung, insbesondere eines Kraftfahrzeugs, die einen Wischarm (12c) und eine Steuereinheit zur Steuerung einer Lage eines Wischblatts relativ zum Wischarm (12c) abhängig von zumindest einer Betriebsgröße, insbesondere einer Lage des Wischarms (12c), aufweist, **dadurch gekennzeichnet, dass** der Wischarm (12c) einen bistabilen Teilbereich (58c) mit zumindest einem Blattfederelement (30c) zur Erzeugung einer Auflagekraft und einem Gelenk (64c) aufweist, wobei der bistabile Teilbereich (58c) eine Abklappvorrichtung bildet.

## Claims

1. Wiper device, in particular of a motor vehicle, which wiper device has a wiper arm (12a, 12b) and a control unit (18a, 18b) for controlling a position (α) of a wiper blade (10a, 10b) relative to the wiper arm (12a, 12b) as a function of at least one operating variable (β), in particular an operating position of the wiper arm (12a, 12b), wherein the wiper arm (12a, 12b) has a degree of freedom (γ), realized without a joint, for generating a contact force, wherein the control unit (18a, 18b) has a mechanical connecting part (22a, 22b), distinct from the wiper arm (12a, 12b), to a vehicle body, **characterized in that** the wiper arm (12a, 12b) and the connecting part (22a, 22b) are arranged one above the other as seen in plan view in at least one operating position and in at least one sub-segment of the wiper arm (12a, 12b).

2. Wiper device according to Claim 1, **characterized in that** the connecting part (22a, 22b) is formed by a second wiper arm.

3. Wiper device at least according to Claim 1, **characterized in that** the control unit (18a, 18b) controls the position (α) of the wiper blade (10a, 10b) as a function of a position of the connecting part (22a, 22b) relative to the wiper arm (12a, 12b).

4. Wiper device at least according to Claim 1, **characterized in that** the wiper arm (12a) and the connecting part (22a) are connected, at a free end of the wiper arm (12a), by a coupler (24a) to which the wiper blade (10a) is substantially rigidly connected in a mounted state.

5. Wiper device at least according to Claim 1, **characterized in that** the connecting part (22b) has at least one flexible sub-region (26b).

6. Wiper device according to one of the preceding claims, **characterized in that** the wiper arm (12a) has at least one region (28b) which is stiffened by at least one profile.

7. Wiper device according to Claim 6, **characterized in that** the stiffened region (28a) is formed as a spoiler (34a).

8. Wiper device, in particular of a motor vehicle, which wiper device has a wiper arm (12c) and a control unit for controlling a position of a wiper blade relative to the wiper arm (12c) as a function of at least one operating variable, in particular a position of the wiper arm (12c), **characterized in that** the wiper arm (12c) has a bistable sub-region (58c) with at least one leaf spring element (30c) for generating a contact force and has a joint (64c), wherein the bistable sub-region (58c) forms a hinge device.

## Revendications

1. Dispositif d'essuie-glace, en particulier d'un véhicule automobile, qui comprend un bras d'essuie-glace (12a, 12b) et une unité de commande (18a, 18b) pour commander une position (α) d'un balai d'essuie-glace (10a, 10b) par rapport au bras d'essuie-glace (12a, 12b) en fonction d'au moins une grandeur de fonctionnement (β), en particulier d'une position de fonctionnement du bras d'essuie-glace (12a, 12b), le bras d'essuie-glace (12a, 12b) comprenant un degré de liberté (γ) réalisé sans articulation pour générer une force d'appui, l'unité de commande (18a, 18b) comprenant une partie de liaison mécanique (22a, 22b) à une carrosserie de véhicule, laquelle partie de liaison est différente du bras d'essuie-glace (12a, 12b), **caractérisé en ce que** le bras d'essuie-glace (12a, 12b) et la partie de liaison (22a, 22b) sont disposés de manière superposée en vue de dessus dans au moins une position de fonctionnement et dans au moins une section partielle du bras d'essuie-glace (12a, 12b).

2. Dispositif d'essuie-glace selon la revendication 1, **caractérisé en ce que** la partie de liaison (22a, 22b) est formée par un deuxième bras d'essuie-glace.

3. Dispositif d'essuie-glace au moins selon la revendication 1, **caractérisé en ce que** l'unité de commande (18a, 18b) commande la position (α) du balai d'essuie-glace (10a, 10b) en fonction d'une position de la partie de liaison (22a, 22b) par rapport au bras d'essuie-glace (12a, 12b).

4. Dispositif d'essuie-glace au moins selon la revendication 1, **caractérisé en ce que** le bras d'essuie-glace (12a) et la partie de liaison (22a) sont reliés par une bielle (24a) à une extrémité libre du bras d'essuie-glace (12a), à laquelle bielle est relié essentiellement rigidement le balai d'essuie-glace (10a) dans un état monté.

5. Dispositif d'essuie-glace au moins selon la revendication 1, **caractérisé en ce que** la partie de liaison (22b) comprend au moins une région partielle flexible (26b).

6. Dispositif d'essuie-glace selon l'une quelconque des revendications précédentes, **caractérisé en ce que** le bras d'essuie-glace (12a) comprend au moins une région (28a) rigidifiée par au moins un profilé.

7. Dispositif d'essuie-glace selon la revendication 6, **caractérisé en ce que** la région rigidifiée (28a) est réalisée sous forme de déflecteur (34a).

8. Dispositif d'essuie-glace, en particulier d'un véhicule automobile, qui comprend un bras d'essuie-glace (12c) et une unité de commande pour commander une position d'un balai d'essuie-glace par rapport au bras d'essuie-glace (12c) en fonction d'au moins une grandeur de fonctionnement, en particulier d'une position du bras d'essuie-glace (12c), **caractérisé en ce que** le bras d'essuie-glace (12c) comprend une région partielle bistable (58c) dotée d'au moins un élément de ressort à lame (30c) pour générer une force d'appui et d'une articulation (64c), la région partielle bistable (58c) formant un dispositif de rabattement.
